# EUROPEAN PATENT APPLICATION

(11) **EP 4 831 128 A1**
(43) Date of publication of application: **28.10.2026**
(21) Application number: 24908305.6
(22) Date of filing: 17.12.2024
(51) Int. Cl.: C01D 15/02, C01D 1/38, C01D 1/30, B01D 61/44

(54) **METHOD FOR PREPARING LITHIUM HYDROXIDE FROM LITHIUM-CONTAINING SOURCE**

(30) Priority: 18.12.2023 KR 20230185264
(71) Applicant: POSCO Holdings Inc., Pohang-si, Gyeongsangbuk-do 37859 (KR)
(72) Inventor: KIM, Kyunghoon, Pohang-si, Gyeongsangbuk-do 37859 (KR); CHOI, Jaehyug, Pohang-si, Gyeongsangbuk-do 37859 (KR); KIM, Hyejeong, Pohang-si, Gyeongsangbuk-do 37859 (KR); LEE, Sihwa, Pohang-si, Gyeongsangbuk-do 37859 (KR); KANG, Chanhyeok, Pohang-si, Gyeongsangbuk-do 37859 (KR); MYEONG, Wan Jae, Pohang-si, Gyeongsangbuk-do 37859 (KR)
(74) Representative: Pfenning, Meinig & Partner mbB
(86) International application number: PCT/KR2024/097058
(87) International publication number: WO 2025/136023

(57) **Abstract**

A method for manufacturing lithium hydroxide according to one embodiment of the present invention includes: introducing a lithium-containing raw material into a roasting apparatus and sulfuric acid roasting the lithium-containing raw material; leaching the roasted lithium-containing raw material to obtain a solution including lithium sulfate; purifying the leached solution; and introducing the purified solution into a bipolar electrodialysis apparatus to obtain an aqueous lithium hydroxide solution, wherein a dilute sulfuric acid solution discharged from the bipolar electrodialysis apparatus is concentrated in a concentrator, concentrated sulfuric acid is circulated and supplied to the roasting apparatus, and a concentration ratio of lithium (Li) to sulfur (S) (Li/S) in the dilute sulfuric acid solution introduced into the concentrator is 0.07 or less.

## Description

### [TECHNICAL FIELD]

One embodiment of the present invention may provide a method for manufacturing lithium hydroxide from a raw material containing lithium. Specifically, one embodiment of the present invention may provide a method for manufacturing lithium hydroxide by electrodialysis from a raw material containing lithium, as a method for stable operation of an electrodialysis process and a sulfuric acid concentration process, in which dilute sulfuric acid produced in the electrodialysis process is stably concentrated and reused.

### [BACKGROUND ART]

Recently, with rapid growth of the IT and electric vehicle markets, demand for lithium, which is a core raw material of secondary batteries, is expected to greatly increase. The lithium market for secondary batteries is highly concentrated in Korea, China, and Japan, but Korea depends entirely on imports, and thus a stable supply method is needed. Accordingly, technologies for extracting lithium from ores and brine are being developed, and in Korea, a demo plant for producing lithium carbonate and lithium hydroxide from ores is being operated. Several companies in South America, China, and the like are producing a large amount of lithium, and research on production of lithium compounds such as lithium hydroxide is also being conducted in Korea.

Conventional technologies for manufacturing lithium hydroxide may be classified into a lithium leaching process and a process of obtaining lithium hydroxide.

First, a process of leaching lithium from ore is a process in which, first, the crystal structure of the ore is changed into a crystal structure from which lithium can be easily extracted by using a phase change of the ore through calcination, and is changed into a form for extracting lithium in the ore through acid roasting. Next, an acidic solution containing lithium is obtained through leaching.

In the above process, sulfuric acid (H₂SO₄) is mainly used as the acid used for acid roasting, and hydrochloric acid (HCl) is used in some processes. However, because of environmental problems, sulfuric acid is currently used in almost all commercial processes. As a result, the obtained acidic solution containing lithium is obtained in the state of an aqueous solution of lithium sulfate (Li₂SO₄), which is a known technology used in most processes for extracting lithium from ores.

The aqueous lithium sulfate solution obtained after the lithium sulfate extraction process contains various impurities derived from the ore, such as Mg, Ca, Fe, Ni, Mn, Si, and Al. In order to introduce the solution into a subsequent process, the solution is purified to obtain a purified aqueous lithium sulfate solution, and is converted into lithium hydroxide through base treatment or the like.

Second, as another process for obtaining lithium hydroxide from lithium sulfate, a method using electrolysis or electrodialysis is known. A process of directly introducing a lithium sulfate solution into an electrolysis or electrodialysis apparatus to manufacture a lithium hydroxide solution, or a method of adding phosphoric acid (H₃PO₄) to obtain lithium phosphate (Li₃PO₄), then converting it back into a lithium sulfate form, and introducing it into an electrolysis and electrodialysis apparatus to obtain an aqueous lithium hydroxide solution is known.

Meanwhile, as a technology combining the above two technologies, lithium may be extracted from ore in the form of an aqueous lithium sulfate solution, converted into an aqueous lithium hydroxide solution using electrodialysis, and the aqueous lithium hydroxide solution may be crystallized to produce lithium hydroxide monohydrate (LiOH·H₂O). Here, the electrodialysis process is a core process for converting the aqueous lithium sulfate solution into an aqueous lithium hydroxide solution, and dilute sulfuric acid is produced as a by-product.

### [DETAILED DESCRIPTION OF THE INVENTION]

### [Technical Problem]

An object of the present invention is to provide a method for manufacturing lithium hydroxide, capable of stably concentrating and circulating dilute sulfuric acid produced in an electrodialysis process, thereby enabling stable operation of the electrodialysis process and increasing the lifespan of an ion exchange membrane.

### [Technical Solution]

A method for manufacturing lithium hydroxide according to one embodiment of the present invention includes: introducing a lithium-containing raw material into a roasting apparatus and sulfuric acid roasting the lithium-containing raw material; leaching the roasted lithium-containing raw material to obtain a solution including lithium sulfate; purifying the leached solution; and introducing the purified solution into a bipolar electrodialysis apparatus to obtain an aqueous lithium hydroxide solution. Concentrated sulfuric acid obtained by introducing a dilute sulfuric acid solution discharged from the bipolar electrodialysis apparatus into a concentrator is circulated and supplied to the roasting apparatus, and a concentration ratio of lithium (Li) to sulfur (S) (Li/S) in the dilute sulfuric acid solution introduced into the concentrator is 0.07 or less.

The concentration of the dilute sulfuric acid solution is 6.0 to 15.0 wt%, and the dilute sulfuric acid solution is concentrated to a concentration of 90 wt% or more.

Precipitates are not generated during the process of concentrating the dilute sulfuric acid solution discharged from the bipolar electrodialysis apparatus.

The purifying of the leached solution includes: a first purification step of purifying the leached solution, wherein the first purification step has a pH of 7.1 to 9.5; and a second purification step of purifying the first-purified solution, wherein the second purification step has a pH of 9 to 11.

The lithium-containing raw material is a lithium-containing ore.

The method further includes calcining the lithium-containing raw material at 950 to 1100°C before acid roasting the lithium-containing raw material.

The sulfuric acid roasting of the lithium-containing raw material uses concentrated sulfuric acid having a concentration of 95% or more.

In the acid roasting of the lithium-containing raw material, sulfuric acid is introduced in an equivalent amount of 200 to 300% by weight ratio with respect to the weight of lithium, the roasting temperature is 180 to 300°C, and the roasting time is 40 to 120 minutes.

The leaching step of leaching the roasted lithium-containing raw material to obtain the solution including lithium sulfate is a step of leaching using water or dilute sulfuric acid.

The water is purified water, and the dilute sulfuric acid is recycled from that generated in the step of obtaining the aqueous lithium hydroxide solution by bipolar electrodialysis of the purified solution.

The first purification step of purifying the leached solution, wherein the first purification step has a pH of 7.1 to 9.5, is a step of purifying by adjusting pH using a non-Na-based alkali source.

The non-Na-based alkali source is calcium hydroxide (Ca(OH)₂).

The second purification step of purifying the first-purified solution, wherein the second purification step has a pH of 9 to 11, is a step of purifying by adjusting pH using an alkali metal carbonate source.

The method further includes additionally purifying using an ion exchange resin in order to remove trace impurities remaining in the second-purified solution generated in the second purification step.

The method further includes, after the step of obtaining the aqueous lithium hydroxide solution by bipolar electrodialysis of the second-purified solution generated in the second purification step, crystallizing the obtained aqueous lithium hydroxide solution.

The crystallization step includes: obtaining lithium hydroxide monohydrate through primary crystallization; redissolving the obtained lithium hydroxide monohydrate; and secondarily crystallizing the redissolved solution to obtain final lithium hydroxide monohydrate.

### [Advantageous Effects]

The method for manufacturing lithium hydroxide according to one embodiment of the present invention has an advantage of enabling stable and efficient operation of an electrodialysis process and a sulfuric acid concentration process.

The method for manufacturing lithium hydroxide according to one embodiment of the present invention has an advantage of increasing the lifespan of an ion exchange membrane through stable operation of the electrodialysis process.

### [BRIEF DESCRIPTION OF THE DRAWINGS]

FIG. 1 is a flowchart of a lithium hydroxide manufacturing process according to one embodiment of the present invention.
FIG. 2 shows experimental results of changes in the Li/H₂SO₄ concentration ratio in a solution according to a concentration rate in an Example of the present invention.

### [BEST MODE FOR CARRYING OUT THE INVENTION]

In the present specification, terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is merely for referring to particular embodiments and is not intended to limit the present invention. As used herein, singular forms also include plural forms unless the phrases clearly indicate the contrary. As used in the specification, the meaning of "comprising" specifies stated features, regions, integers, steps, operations, elements, and/or components, and does not exclude the presence or addition of other features, regions, integers, steps, operations, elements, and/or components.

When a part is referred to as being "above" or "on" another part, it may be directly above or on the other part, or another part may be interposed therebetween. In contrast, when a part is referred to as being "directly above" another part, no other part is interposed therebetween.

In addition, unless specifically stated otherwise, % means wt%, and 1 ppm is 0.0001 wt%.

Although not otherwise defined, all terms used herein, including technical and scientific terms, have the same meanings as commonly understood by a person having ordinary skill in the art to which the present invention pertains. Terms defined in commonly used dictionaries are further interpreted as having meanings consistent with the related technical literature and the presently disclosed content, and unless defined otherwise, are not interpreted in an idealized or overly formal sense.

Hereinafter, embodiments of the present invention will be described in detail so that a person having ordinary skill in the art to which the present invention pertains can easily practice the present invention. However, the present invention may be implemented in various different forms and is not limited to the embodiments described herein.

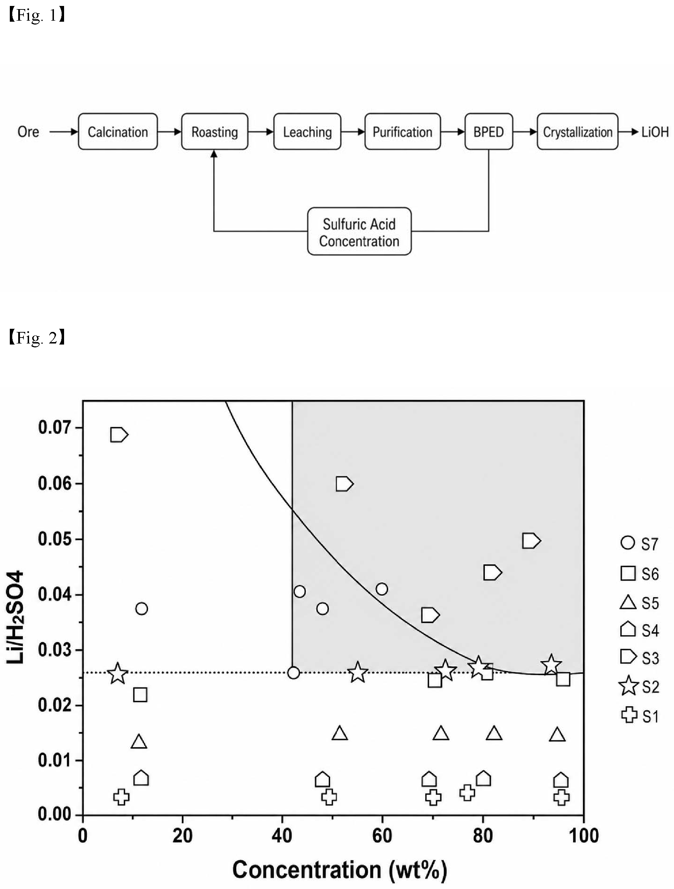

FIG. 1 is a flowchart of a lithium hydroxide manufacturing process according to one embodiment of the present invention.

With reference to FIG. 1, each step of the lithium hydroxide manufacturing process of the present invention will be specifically examined.

One embodiment of the present invention is intended to provide a method for manufacturing lithium hydroxide using lithium-containing ore, specifically spodumene concentrate.

First, a step of introducing a lithium-containing raw material into a roasting apparatus and sulfuric acid roasting the lithium-containing raw material is performed.

Specifically, an ore raw material containing lithium is calcined to change the crystal state of the ore from an initial α phase to a β phase in which roasting and leaching are easy. At this time, the calcination temperature may be in a range of 950 to 1100°C. When calcination is performed at a temperature lower than the above temperature, under-calcination occurs, and when calcination is performed at a higher temperature, over-calcination occurs, thereby reducing the efficiency of leaching lithium.

Acid roasting is performed on the ore for which the calcination has been completed. At this time, the acid roasting process uses concentrated sulfuric acid having a concentration of 95% or more, or anhydrous sulfuric acid, the equivalent amount of sulfuric acid introduced is 200 to 300% by weight ratio with respect to the weight of lithium included in the ore, the roasting temperature is 180 to 300°C, and the roasting time may be 40 to 120 minutes.

In order to reduce process costs and utilize by-products, as the concentrated sulfuric acid, dilute sulfuric acid (6 to 15% H₂SO₄) generated in bipolar electrodialysis, which will be described later, may be recycled.

In one embodiment of the present invention, the dilute sulfuric acid solution discharged from the bipolar electrodialysis apparatus may be concentrated in a concentrator to form concentrated sulfuric acid, and the concentrated sulfuric acid may be circulated and supplied to the roasting apparatus for use. The dilute sulfuric acid (6 to 15%) generated in the bipolar electrodialysis step according to one embodiment of the present invention is in a state in which sulfate (SO₄²⁻) is included in purified water.

At this time, a concentration ratio of lithium (Li) to sulfur (S) (Li/S) in the dilute sulfuric acid solution introduced into the concentrator may be controlled to 0.0766 or less.

By controlling the concentration ratio of lithium (Li) to sulfur (S) (Li/S) in the dilute sulfuric acid solution to 0.0766 or less, precipitates are not generated during the concentration process, so that the concentration process can be smoothly operated, which is preferable.

Specifically, when the concentration ratio of lithium (Li) to sulfur (S) (Li/S) in the dilute sulfuric acid discharged from the bipolar electrodialysis apparatus exceeds 0.0766, sulfuric acid at a high concentration may be mixed to adjust Li/S to 0.0766 or less.

The dilute sulfuric acid generated in the bipolar electrodialysis mainly includes lithium as an impurity, and as the anion membrane or bipolar membrane of the electrodialysis process approaches the end of its lifespan, the concentration of lithium impurities in the dilute sulfuric acid increases.

When the ratio of the lithium impurity concentration to the sulfuric acid concentration of the dilute sulfuric acid increases, precipitates such as lithium sulfate (Li₂SO₄) are generated in sulfuric acid concentration equipment during concentration at a certain ratio or higher. Therefore, operation of the dilute sulfuric acid circulation utilization process does not proceed smoothly, and the operating rate of the electrodialysis process itself decreases, thereby causing a problem in that overall lithium hydroxide productivity decreases.

Meanwhile, in the concentrator, the dilute sulfuric acid solution may be concentrated to concentrated sulfuric acid having a sulfuric acid concentration of up to 95 wt%, and may be mixed with concentrated sulfuric acid used as a raw material in the sulfuric acid roasting step and introduced into the roasting apparatus.

In the present invention, the concentrator and the concentration method are not limited as long as the dilute sulfuric acid discharged from the bipolar electrodialysis apparatus can be efficiently concentrated to the desired concentrated sulfuric acid.

Next, a leaching step of leaching the roasted lithium-containing raw material to obtain a solution including lithium sulfate is performed.

In the step of leaching the roasted ore for which roasting has been completed, the solvent used may be purified water containing no impurities or dilute sulfuric acid. The purified water is obtained by treating freshwater by RO or the like, and in order to reduce process costs and utilize by-products, as the dilute sulfuric acid, dilute sulfuric acid (6 to 15% H₂SO₄) generated in bipolar electrodialysis may be recycled.

The aqueous solution having undergone the leaching process as described above is obtained as a solution containing lithium sulfate (Li₂SO₄) as a main component, and various impurities derived from the ore raw material, such as Al, Si, Ca, Mg, Fe, Ni, Na, and K, are present in the solution, so that a purification step described below is performed.

Next, a step of purifying the leached solution is performed.

For purification of the lithium sulfate solution, a two-step chemical purification process may be performed. The first purification step may use a non-Na-based alkali source, and the pH of the first purification step may be 7.1 to 9.5. That is, the first purification step may be performed in a pH range above the pH range of 5 to 7, which is the pH range in which Al and Si impurities are precipitated and purified.

In addition, in one embodiment of the present invention, calcium hydroxide (Ca(OH)₂) may be used as the non-Na-based alkali source in the first purification step. In this process, pH fluctuation is more stable than in a process using NaOH as an alkali source. This is because, in the case of NaOH, due to a rapid reaction, the pH rapidly increases at the initial stage of input and then repeatedly decreases again, and thus has a disadvantage in that it is difficult to control pH during the process, with pH varying from 4 to 9. In contrast, when a non-Na-based alkali source, that is, calcium hydroxide, is used, the pH increases to 8 or more immediately after input, and even 2 hours after input, the pH of the solution is maintained at 7.1 or more. That is, the pH does not decrease to 7.1 or less, which is the pH range of the primary purification process used in the developed process configuration, and since the reaction time of the process of the present invention is within 1 hour, the pH of the solution does not rapidly change and can be stably maintained at 7.1.

At this time, since calcium hydroxide has low solubility, it may be supplied in a slurry state for smooth supply. The solid-liquid ratio of the calcium hydroxide slurry is a weight ratio of "water:calcium hydroxide" of 5:1, and an input variation amount of ±20% is allowed with respect to the 5:1 condition. That is, the solid-liquid ratio may be 4:1 to 6:1. The molar ratio of OH⁻ according to a variation in the mixing ratio of the slurry may also allow an input variation amount of ±20% with respect to a target amount of 0.13 mol. That is, the molar ratio of OH⁻ may be 0.104 to 0.156.

In general, the theoretical maximum precipitation pH range for a pure Al material is a range of 5 to 7. However, in the case of the aqueous lithium sulfate solution obtained by the leaching, various impurity ions are present inside the solution, and a common ion effect and interaction with oxide floating particles due thereto act. Accordingly, the Al precipitation pH range in the aqueous lithium sulfate solution may be a pH range of 7.1 to 9.5, which slightly exceeds the theoretical precipitation pH range, and the process disclosed in the present invention is characterized by using the above pH range.

In addition, the above leaching and first purification step are described as two separate processes. However, in an actual process, the leaching and the first purification step may be performed in a single reactor. That is, roasted ore may be introduced into one reactor, leaching water may then be charged, and then a non-Na-based alkali source slurry may be reacted together, so that leaching and the first purification step may be performed simultaneously. The leaching water may be purified water or dilute sulfuric acid as described above.

Subsequently, a second purification step is performed, and the second purification step may be a step of removing trace impurity elements not removed in the first purification step and residual metal components, such as Ca, derived from the introduced non-Na-based alkali source, for example, calcium hydroxide. In the second purification step, pH may be increased to a range of 9 to 11 using an alkali metal carbonate to remove trace impurities remaining in the form of carbonates. Specifically, the alkali metal carbonate may be Na₂CO₃.

Next, if a trace amount of Ca and Mg remains in the aqueous lithium sulfate solution having undergone the second purification step, an additional purification step may be performed using an ion exchange resin. The criterion for performing the additional purification step is when the concentrations of Ca and Mg in the aqueous lithium sulfate solution after the second purification step each exceed 10 ppm, and when the concentrations are below this criterion, the additional purification step is not performed.

Subsequently, a step of introducing the purified solution into a bipolar electrodialysis apparatus to obtain an aqueous lithium hydroxide solution is performed.

In order to convert the purified aqueous lithium sulfate solution obtained through the first and second purification steps, and if necessary, the additional purification step, into lithium hydroxide (LiOH), a bipolar electrodialysis step is performed. The bipolar electrodialysis step is a step of converting the aqueous lithium sulfate solution introduced into a bipolar electrodialysis apparatus into an aqueous lithium hydroxide solution and a sulfuric acid solution.

The concentration of lithium hydroxide manufactured in the bipolar electrodialysis step is characterized by 2 to 3 mol%, and the concentration of the obtained sulfuric acid can be adjusted to a level of 5 to 15 wt%. In addition, a portion of generated desalinated water may be recycled in a process of obtaining lithium carbonate by diluting a primary crystallizer purge solution. In addition, the obtained dilute sulfuric acid may be concentrated and introduced into a sulfuric acid roasting apparatus. The method of concentrating, in a concentrator, the dilute sulfuric acid solution discharged from the bipolar electrodialysis apparatus and recycling the same to the roasting apparatus has been described above in detail, and thus will be omitted here.

The method for manufacturing lithium hydroxide according to one embodiment of the present invention may further include a crystallization step for solidifying and purifying the aqueous lithium hydroxide solution obtained through the bipolar electrodialysis step. The crystallization step may include obtaining lithium hydroxide monohydrate through primary crystallization, redissolving the same, and obtaining final lithium hydroxide monohydrate through secondary crystallization.

In the crystallization step, as a means for removing monovalent ion impurities, Na and K ions, included in the lithium ore, the amount of purge solution of the crystallizer in the primary crystallization step may be set to a level of 17 to 18% based on the introduced lithium concentration. At this time, in order to recover lithium in the purge solution, lithium in the purge solution may be fixed as lithium carbonate. At this time, since the purge solution generated in the crystallizer is a saturated lithium hydroxide solution, desalinated water generated in bipolar electrodialysis is used to dilute the purge solution to an appropriate concentration range, that is, less than 30 g/L based on the lithium concentration. Since the diluted purge solution is in an alkaline state, lithium carbonate may be manufactured using carbon dioxide gas (CO₂). The manufactured lithium carbonate is purified through washing to obtain purified lithium carbonate, and Na and K ions, which are monovalent ion impurities derived from the ore, may be discharged through washing water.

### [MODE FOR CARRYING OUT THE INVENTION]

Hereinafter, embodiments of the present invention will be described in more detail through Examples. However, the following Examples are merely preferred embodiments of the present invention, and the present invention is not limited by the following Examples.

### (Example)

Lithium hydroxide was manufactured using spodumene concentrate of a lithium-containing ore. The manufacturing method was performed by the method disclosed above.

A concentration experiment was performed according to the sulfuric acid concentration and lithium concentration in the dilute sulfuric acid solution discharged from the bipolar electrodialysis apparatus.

The total concentration of sulfuric acid (H₂SO₄) and lithium sulfate (Li₂SO₄) according to the concentration rate is shown in Table 1 below.

In the present invention, the concentration rate is expressed in wt% and is calculated from the following Equation (1). 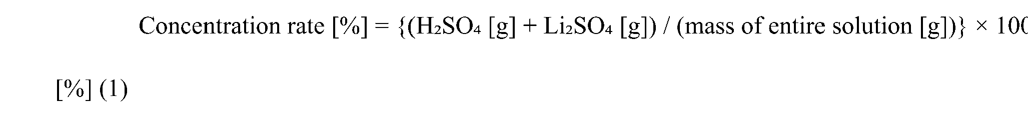 Concentration rate [%] = {(H2SO4 [g] + Li2SO4 [g]) / (mass of entire solution [g])} × 100 [%] (1)

**[Table 1]**

| | Sulfuric Acid Solution | | | | | | | |
|---|---|---|---|---|---|---|---|---|
| | | S1 | S2 | S3 | S4 | S5 | S6 | S7 |
| | Li(g/L) | 0.15 | 2 | 5 | 0.5 | 1.5 | 3 | 5 |
| Initial (actual value) | H₂SO₄(wt%) | 7.55 | 7.18 | 7.61 | 11.09 | 11.59 | 11.76 | 11.83 |
| Concentration rate 50% | H₂SO₄+Li₂SO₄(wt%) | 18.41 | 54.85 | 51.95 | 47.59 | 50.98 | 50.07 | 17.63 |
| Concentration rate 70% | H₂SO₄+Li₂SO₄(wt%) | 69.84 | 74.46 | 69.19 | 69.38 | 71.37 | 70.65 | 12.05 |
| Concentration | H₂SO₄+Li₂SO₄(wt%) | 76.29 | 85.76 | 81.43 | 80.42 | 82.20 | 80.35 | 12.69 |
| rate 80% | | | | | | | | |
| Concentration rate 95% | H₂SO₄+Li₂SO₄(wt%) | 95.58 | 95.29 | 89.21 | 95.43 | 94.54 | 95.25 | 59.65 |

The Li/S concentration ratio in the solution according to the concentration rate is shown in Table 2 below.

**[Table 2]**

| | Sulfuric Acid Solution | | | | | | | |
|---|---|---|---|---|---|---|---|---|
| | | S1 | S2 | S3 | S4 | S5 | S6 | S7 |
| | Li(g/L) | 0.15 | 2 | 5 | 0.5 | 1.5 | 3 | 5 |
| Initial | Li/S | 0.00402 | 0.06204 | 0.14092 | 0.01337 | 0.03178 | 0.05455 | 0.08848 |
| Concentration rate 50% | Li/S | 0.00570 | 0.06761 | 0.12744 | 0.01355 | 0.03636 | 0.05963 | 0.08750 |
| Concentration rate 70% | Li/S | 0.00526 | 0.06653 | 0.08416 | 0.01283 | 0.03636 | 0.06256 | 0.06519 |
| Concentration rate 80% | Li/S | 0.00602 | 0.07018 | 0.09961 | 0.01260 | 0.03684 | 0.06512 | 0.09412 |
| Concentration rate 95% | Li/S | 0.00545 | 0.06471 | 0.10954 | 0.01158 | 0.03595 | 0.06307 | 0.09474 |

In Tables 1 and 2, the cells indicated in bold font are cases in which precipitates were generated by concentration.

With reference to Tables 1 and 2, it was confirmed that the concentration of lithium (Li) and the concentration of sulfuric acid (H₂SO₄) in the solution before concentration affect precipitation.

FIG. 2 shows the Li/H₂SO₄ concentration ratio in the solution according to the concentration rate of Table 2.

Referring to FIG. 2, precipitation occurred in the region indicated by gray shading.

Based on the results of this graph, when a fitting line is drawn based on the point at which the first precipitation occurred in each experiment, the trend equation is as follows. [Equation 1] $y = 1 E - {5 x}^{2} - 0.0021 x + 0.1207 ,$
R² of Equation 1 = 0.5214,
Y is Li/H₂SO₄, and x is the concentration rate.

Accordingly, it can be expected that, when the Li/H₂SO₄ ratio is 0.025 or more (Li/S 0.07) and the concentration rate is 40% or more, that is, above the fitting line, precipitation is likely to occur during concentration.

In the lithium hydroxide production process according to the present invention, when the state of the membrane of the bipolar electrodialysis apparatus ages or the performance thereof deteriorates and Li impurities in the produced dilute sulfuric acid increase, when the Li/S concentration ratio reaches 0.07, a certain amount of high-concentration sulfuric acid is introduced before introduction into the concentration process, thereby diluting the Li/S concentration ratio to 0.07 or less and suppressing generation of precipitates in the concentration process.

Meanwhile, the high-concentration sulfuric acid for dilution may be commercial sulfuric acid of 50% or more, or sulfuric acid that has already been highly concentrated may be used.

That is, before introducing dilute sulfuric acid into the concentration process of the present invention, when the Li/S concentration ratio is higher than 0.07, a certain amount of high-concentration sulfuric acid is introduced to adjust the Li/S concentration ratio to 0.07 or less, thereby preventing generation of precipitates even when sulfuric acid having a concentration of 90% or more, or 95% or more, is produced in the concentration process.

Although preferred embodiments of the present invention have been described above, the present invention is not limited thereto, and various modifications can be made and practiced within the scope of the claims, the detailed description of the invention, and the accompanying drawings, and it is obvious that these also fall within the scope of the present invention.

Accordingly, the substantial scope of rights of the present invention should be defined by the appended claims and equivalents thereof.

## Claims

1. A method for manufacturing lithium hydroxide, comprising:
introducing a lithium-containing raw material into a roasting apparatus and sulfuric acid roasting the lithium-containing raw material;
leaching the roasted lithium-containing raw material to obtain a solution including lithium sulfate;
purifying the leached solution; and
introducing the purified solution into a bipolar electrodialysis apparatus to obtain an aqueous lithium hydroxide solution,
wherein concentrated sulfuric acid obtained by introducing a dilute sulfuric acid solution discharged from the bipolar electrodialysis apparatus into a concentrator is circulated and supplied to the roasting apparatus, and
wherein a concentration ratio of lithium (Li) to sulfur (S) (Li/S) in the dilute sulfuric acid solution introduced into the concentrator is 0.07 or less.

2. The method for manufacturing lithium hydroxide of claim 1,
wherein a concentration of the dilute sulfuric acid solution is 6.0 to 15.0 wt%.

3. The method for manufacturing lithium hydroxide of claim 1,
wherein the dilute sulfuric acid solution is concentrated to a concentration of 90 wt% or more.

4. The method for manufacturing lithium hydroxide of claim 1,
wherein precipitates are not generated during a process of concentrating the dilute sulfuric acid solution discharged from the bipolar electrodialysis apparatus.

5. The method for manufacturing lithium hydroxide of claim 1,
wherein the purifying of the leached solution comprises:
a first purification step of purifying the leached solution, wherein the first purification step has a pH of 7.1 to 9.5; and
a second purification step of purifying a first-purified solution generated in the first purification step, wherein the second purification step has a pH of 9 to 11.

6. The method for manufacturing lithium hydroxide of claim 1,
wherein the lithium-containing raw material is a lithium-containing ore.

7. The method for manufacturing lithium hydroxide of claim 1,
further comprising calcining the lithium-containing raw material at 950 to 1100°C before acid roasting the lithium-containing raw material.

8. The method for manufacturing lithium hydroxide of claim 1,
wherein the sulfuric acid roasting of the lithium-containing raw material uses concentrated sulfuric acid having a concentration of 95% or more.

9. The method for manufacturing lithium hydroxide of claim 1,
wherein, in the acid roasting of the lithium-containing raw material,
sulfuric acid is introduced in an equivalent amount of 200 to 300% by weight ratio with respect to the weight of lithium, a roasting temperature is 180 to 300°C, and a roasting time is 40 to 120 minutes.

10. The method for manufacturing lithium hydroxide of claim 1,
wherein the leaching step of leaching the roasted lithium-containing raw material to obtain the solution including lithium sulfate is a step of leaching using water or dilute sulfuric acid.

11. The method for manufacturing lithium hydroxide of claim 10,
wherein the water is purified water, and
wherein the dilute sulfuric acid is recycled from that generated in the step of obtaining the aqueous lithium hydroxide solution by bipolar electrodialysis of the purified solution.

12. The method for manufacturing lithium hydroxide of claim 5,
wherein the first purification step of purifying the leached solution, wherein the first purification step has a pH of 7.1 to 9.5, is a step of purifying by adjusting pH using a non-Na-based alkali source.

13. The method for manufacturing lithium hydroxide of claim 11,
wherein the non-Na-based alkali source is calcium hydroxide (Ca(OH)₂).

14. The method for manufacturing lithium hydroxide of claim 5,
wherein the second purification step of purifying the first-purified solution, wherein the second purification step has a pH of 9 to 11, is a step of purifying by adjusting pH using an alkali metal carbonate source.

15. The method for manufacturing lithium hydroxide of claim 5,
further comprising additionally purifying using an ion exchange resin in order to remove trace impurities remaining in a second-purified solution generated in the second purification step.

16. The method for manufacturing lithium hydroxide of claim 5,
further comprising, after the step of obtaining the aqueous lithium hydroxide solution by bipolar electrodialysis of a second-purified solution generated in the second purification step,
crystallizing the obtained aqueous lithium hydroxide solution.

17. The method for manufacturing lithium hydroxide of claim 16,
wherein the crystallization step comprises:
obtaining lithium hydroxide monohydrate through primary crystallization;
redissolving the obtained lithium hydroxide monohydrate; and
secondarily crystallizing the redissolved solution to obtain final lithium hydroxide monohydrate.
